# EUROPÄISCHE PATENTSCHRIFT

(11) **EP 0 322 595 B1**
(45) Veröffentlichungstag und Bekanntmachung des Hinweises auf die Patenterteilung: **03.02.1993**
(21) Anmeldenummer: 88120130.5
(22) Anmeldetag: 02.12.1988
(51) Int. Cl.: H02B 1/04

(54) **Anordnung zum Befestigen eines Gehäuses**
Housing mounting arrangement
Disposition pour le montage d'un coffret

(30) Priorität: 16.12.1987 DE 3742647
(43) Veröffentlichungstag der Anmeldung: 05.07.1989
(73) Patentinhaber: Mannesmann Kienzle GmbH (HR B1220), 78052 Villingen-Schwenningen (DE)
(72) Erfinder: Jeschonneck, Harald, Dipl.-Ing.(FH), D-7730 Villingen-Schwenningen (DE); Schultze, Hartmut, D-7730 Villingen-Schwenningen (DE)

(56) Entgegenhaltungen:
- DE-A- 2 853 945
- FR-A- 2 445 012
- GB-A- 912 234

## Beschreibung

Die Erfindung betrifft eine Anordnung zum Befestigen eines Gehäuses in einer in einer Wand befindlichen Öffnung.

Soll beispielsweise das Gehäuse eines Gebers oder das Gehäuse eines Steckersockels in der Wand eines Lager- oder Getriebehäuses oder an einem Achskörper lösbar befestigt werden, so ist, da die Wände derartiger Einrichtungen nur von einer Seite zugänglich sind, in der Regel eine Einschraubmontage üblich.

Bei der Befestigung von Gehäusen, an welchen keine Kräfte wirksam sind, wie z. B. Gehäusen für Signalleuchten, Sicherungen und dergl. oder in den Fällen, in denen die betreffende Wand, an welcher das Gehäuse befestigt wird, aus einem relativ weichen Material hergestellt ist, sind auch Steckverbindungen, gegebenenfalls unter Zwischenschaltung eines federnden Bauteils, denkbar. Eine derartige Lösung zeigt die DE-A-28 53 945, bei der eine auf den Schaft eines Gehäuses aufsteckbare, radial federungsfähige Manschette vorgesehen und an dem Gehäuse ein die Federungsfähigkeit der Manschette bei der Montage gestattender, konischer Abschnitt ausgebildet ist. Die Manschette dient in diesem Falle nicht nur der Befestigung des Gehäuses durch federndes Haltern in der Einstecköffnung der betreffenden Wand, sondern auch dem axialen Sichern des Gehäuses an der Wand, indem an der Manschette angeformte Rippen nach dem Einsetzen des Gehäuses die Wand hintergreifen. Abgesehen davon, daß das befestigte Gehäuse in diesem Falle nicht mehr ohne weiteres lösbar ist, ist der Kraftschluß zwischen dem Gehäuse und der Wand nicht für alle Befestigungsfälle ausreichend.

Ist zur Befestigung eines Gehäuses eine Gewindebohrung vorgesehen, so ist die Erstausrüstung relativ unkritisch. Die Nachrüstung kann demgegenüber erhebliche Schwierigkeiten bereiten, isnbesondere wenn der betreffende Geber an einer schlecht zugänglichen Stelle angeordnet werden muß. Eine Einschraubmontage ist grundsätzlich auch dann ungeeignet, wenn die Meßgröße, z. B. Kraft oder Temperatur, in der Wand, in der der Geber befestigt wird, übertragen wird. Infolge des erforderlichen Laufspiels entsteht bei einer Gewindeverbindung ein einseitiger Flankenkontakt mit hoher Flankenpressung und somit für die Meßwertübertragung schlecht reproduzierbare, mechanische Kontaktverhältnisse zwischen der leitenden Wand und dem Gebergehäuse. Ungeeignet ist die Schraubmontage, sieht man von einer wenig handhabungsfreundlichen Kontermutter-Lösung ab, auch dann, wenn ein Ausrichten erforderlich ist, d. h. ein Geber - bezogen auf die Wandebene - richtungsabhängig eingebaut werden muß. Außerdem scheidet bei relativ dünnwandigen Gebergehäusen das Anbringen eines Gewindes wegen der Bruchgefahr aus, vor allem dann, wenn die Befestigungsstelle des Gebers Schwingungen ausgesetzt ist.

Es ist selbstverständlich auch denkbar, das anzubringende Geberhäuse in die Wand einzupressen. Diese Lösung bedingt jedoch durch Einhalten enger Toleranzen einen unangemessen hohen Fertigungsaufwand und kann, abgesehen von für bestimmte Messungen unzulässig hohen Flächenpressungen mit Deformationen und Materialkriechen, der Forderung nach einfacher Lösbarkeit und Wiederverwendbarkeit nicht gerecht werden. Dies gilt auch für Klebeverbindungen, deren Anwendungsbereich zusätzlich durch Temperaturgrenzen eingeschränkt ist, die fertigungstechnisch nicht unproblematisch sind und eine im Meßwertübertragungsweg Wand/Geber ungünstige Isolations- bzw. Störstelle bilden.

Die der vorliegenden Erfindung zugrunde liegende Aufgabe bestand darin, eine Anordnung zu schaffen, mit welcher die Befestigung von Gebern und ähnlichen Aggregaten in einer Wand mit einem minimalen Montageaufwand durchführbar ist, welche sowohl leicht lösbar als auch in der Serienfertigung ausreichend reproduzierbar ist und welche eine plastische Verformung der Befestigungsstelle vermeidet und somit in Fällen der Meßwertübertragung aus der Wand in den Geber eine störungsarme Meßwetübertragung gestattet.

Die Lösung dieser Aufgabe sieht im Prinzip vor, daß die Mantelfläche des Gehäuses einen konischen Abschnitt aufweist, daß dem Gehäuse eine Klemmhülse zugeordnet ist, an welche ein Innenkonus mit einer der Steigung des konischen Abschnitts der Mantelfläche des Gehäuses entsprechenden Steigung sowie ein Anschlagbund ausgebildet sind, und deren Außendurchmeser dem Durchmesser einer zylindrischen Bohrung in der Wand entspricht, und daß an dem Gehäuse Mittel angeformt sind, derart daß ein mit dem Gehäuse verbindbares Spannelement, indem es sich an der Klemmhülse stirnseitig abstützt, einen Axialschub auf das Gehäuse ausübt, so daß sich die Klemmhülse infolge der Keilwirkung zwischen dem Konus und dem Innenkonus aufweitet.

Eine Ausführungsvariante ist dadurch gekennzeichnet, daß das Gehäuse in radialer Richtung elastisch verformbar ist und ein lose im Gehäuse angeordnetes Wandlerelement bzw. dessen Aufnahme während der Axialbewegung des Gehäuses im Gehäuse festgehalten wird.

Der Vorteil, den die gefundene Lösung bietet, ist - abgesehen davon, daß die gestellte Aufgabe zufriedenstellend gelöst ist - zunächst darin zu sehen, daß sie sich für die Nachrüstung in besonderer Weise eignet, indem in der Wand, in der beispielsweise ein Geber befestigt werden soll, lediglich eine zylindrische Bohrung anzubringen ist, wobei relativ grobe Toleranzen zugelassen werden können und außerdem die Montage von einer Seite aus vorgenommen werden kann. Hierdurch wird auch die Akzeptanz für derartige Einbauten verbessert. Ferner macht die großflächige Verteilung der Spannkraft auf die gesamte Bohrlochwand die Befestigung rüttelsicher, gestattet ein Anbringen von Aggregaten auch an Wänden aus geringerfesten Materialien und vermeidet gleichzeitig Flächenpressungen, die den elastischen Bereich der gewählten Werkstoffpaarung der Fügestelle derart einengen, daß zu messende mechanische Spannungen den Bereich der plastischen Verformung erreichen oder überschreiten würden. Mit anderen Worten, die Erfindung verbessert für derartige Messungen das erzielbare Nutz-/Störsignal-Verhältnis. Vorteilhaft ist ferner, daß die erfindungsgemäße Anordnung selbsthemmend ausgebildet sein kann, so daß das Spannelement lediglich als Werkzeug erforderlich ist, daß die Befestigung leicht lösbar ist, und die Elemente wieder verwendbar sind, und daß sie zumindest in radialer Richtung mit hoher Genauigkeit justierbar ist.

Außerdem ist erwähnenswert, daß mit den Elementen der gefundenen Befestigungsanordnung eine leicht handhabbare und als Einbaueinheit handelsfähige Baugruppe gebildet werden kann.

Im folgenden sei die Erfindung anhand der beigefügten Zeichnungen näher erläutert. Es zeigen:
FIGUR 1 eine Schnittdarstellung der Befestigungsanordnung im befestigten Zustand.
FIGUR 2 ein Ausführungsbeispiel des der Befestigungsstelle abgewandten Gehäuseendes.
FIGUR 3 eine Ansicht der Klemmhülse.
FIGUR 4 ein Ausführungsbeispiel mit einem Ring als Spannelement.
FIGUR 5 ein Ausführungsbeispiel, bei dem als Spannelement die Überwurfmutter eines anzuschließenden Kabels dient.

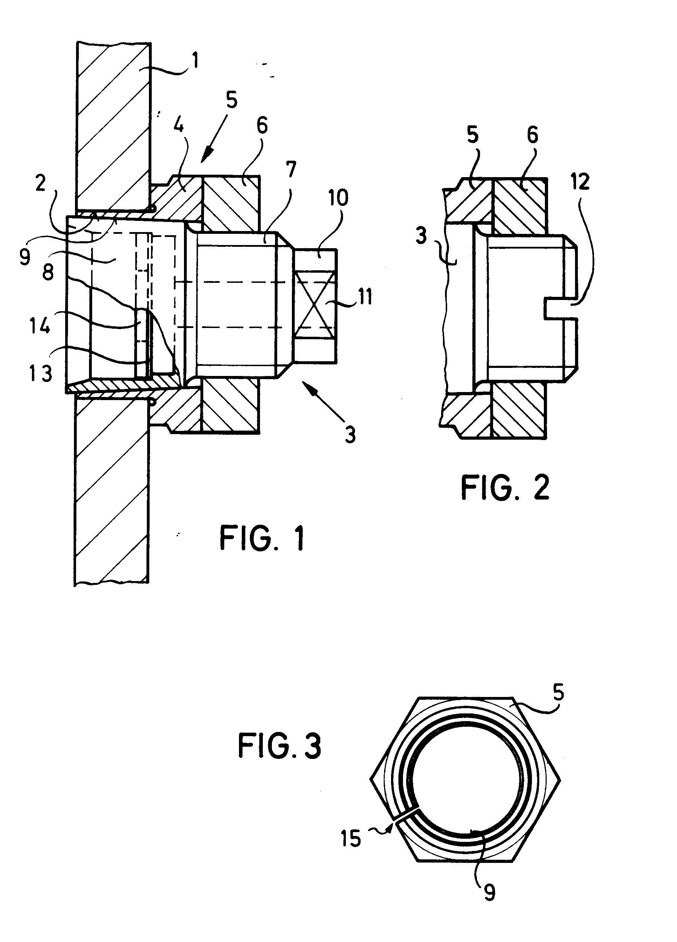

Mit 1 ist in FIGUR 1 beispielsweise die Wand einer Fahrzeugachse bezeichnet, an welcher ein Geber zur Überwachung der Beladung des betreffenden Fahrzeugs befestigt werden soll. Zu diesem Zwecke ist, an einer für das Erfassen der durch die Beladung hervorgerufenen Dehnung geeigneten Stelle der Achse, eine zylindrische Bohrung 2 angebracht. Die Befestigung des Gebers, dessen Gehäuse mit 3 bezeichnet ist, erfolgt mittels einer in die Bohrung 2 einsetzbaren, mit einem Anschlagbund 4 versehenen Klemmhülse 5 und einer als Spannelement dienenden Mutter 6, welcher an dem Gehäuse 3 ein Gewindeansatz 7 zugeordnet ist. An dem Gehäuse 3 sind ferner ein Konus 8, dessen Steigung der Steigung eines an der Klemmhülse 5 ausgebildeten Innenkonus 9 entspricht, sowie ein Ansatz 10 mit wenigstens zwei achssymmetrisch angebrachten Flächen 11 angeformt. Alternativ zum Ansatz 10 kann - wie FIGUR 2 zeigt - am Gewindeansatz 7 eine Nut 12 ausgebildet sein.

Das eigentliche Wandlerelement stellt eine dünne Membran 13 dar, welche eine Dehnung unter Ausnutzung des piezoresistiven Effekts in ein elektrisches Signal umwandelt. Diese Membran 13 ist an einem Ring 14 befestigt, der seinerseits in das Gehäuse 3 eingepresst ist. Es ist jedoch denkbar, die Membran 13 unmittelbar an der Stirnseite einer Bohrungsstufe des Gehäuses 3 (beispielsweise durch Laserschweißen) zu befestigen. Die erforderlichen (der Einfachheit halber wegen nicht dargestellten), elektrischen Verbindungen des Wandlerelementes können sowohl an der Montageseite als auch - wenn der Geber an einer Hohlachse angeordnet ist - innerhalb der Achse zu- und abgefüllt werden. Es ist jedoch zweckmäßig, das Gehäuse 3 in Einbaurichtung in geeigneter Weise zu verschließen.

Die Montage, des mit der lose aufgesetzten Klemmhülse 5 und der aufgeschraubten Mutter 6 vormontierten Gebers, erfolgt durch Einstecken der Klemmhülse 5 in die Bohrung 2, bis zum Anschlagbund 4 der Klemmhülse 5 und durch Anziehen der Mutter 6, vorzugsweise mittels eines drehmomentbegrenzenden Werkzeuges. Dabei läßt sich vor dem endgültigen Verspannen des Gebers in der Wand 1 das Gehäuse 3 mittels des am Ansatz 10 angeformten Zweikants richten und gegen Verdrehen arretieren.

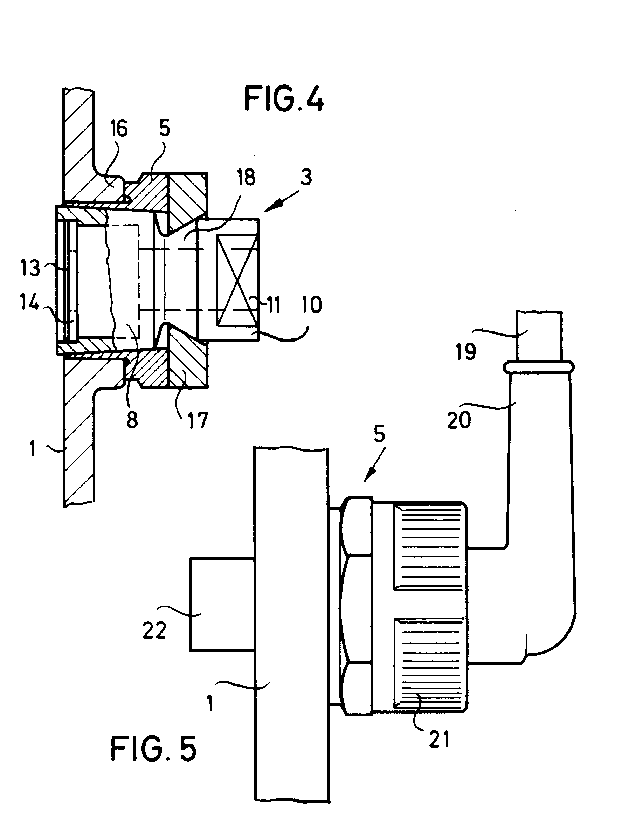

Die über die Mutter 6, die sich während des Anziehens stirnseitig am Anschlagbund 4 abstützt, eingeleitete Axialkraft bewirkt eine Relativbewegung zwischen dem Gehäuse 3 und der Klemmhülse 5. Die Klemmhülse 5, die wie FIGUR 3 zeigt, mit einem Längsschlitz 15 versehen ist, weitet sich infolge der Keilwirkung zwischen dem Konus 8 und dem Innenkonus 9 auf, und der Geber wird auf der gesamten zylindrischen Fläche der Bohrung 2 mit einer einstellbaren Flächenpressung verspannt.

Zum Ausbau des Gebers wird die Mutter 6 gelöst und die Keilwirkung zwischen dem Gehäuse 3 und der Klemmhülse 5 durch axialen Druck auf das Gehäuse 3 aufgehoben. Danach kann der Geber von der Wand von Hand abgezogen werden.

Bei dem Ausführungsbeispiel gemäß FIGUR 4 ist der Geber an einer relativ dünnen, an der Befestigungsstelle durch ein Auge 16 verbreiterten Wand 1 befestigt. Als Spannelement dient ein radial-elastischer Ring 17, dem eine am Gehäuse 3 angeformte Gleitfläche 18 zugeordnet ist.

Das Ausführungsbeispiel Figur 5 zeigt als Spannelement eine einem Kabel 19 bzw. einer das Kabel 19 abschließenden Tülle 20 zugeordnete Überwurfmutter 21. In bekannter Weise wird mit der Überwurfmutter 21 ein in der Tülle 20 gehalterter Steckverbinder mit einem dem Geber zugeordneten Steckersockel in Wirkverbindung gebracht. Gemäß dem Ausführungsbeispiel, Figur 5, wird mit der Überwurfmutter 21 gleichzeitig das Gehäuse des Gebers, in dessen Ansatz 22 beispielsweise ein magnetfeldsensibler Geber angeordnet sein kann, im Zusammenwirken mit der Klemmhülse 5 mit der Wand 1 verspannt. Dabei kann es, um ein Verdrehen des Gehäuses gegenüber der Klemmhülse 5 zu vermeiden, von Vorteil sein, daß zwischen dem Gehäuse und der Klemmhülse 5 eine Verdrehsicherung beispielsweise in Form einer Nut/Feder-Verbindung vorgesehen ist.

Der Vollständigkeit halber sei noch erwähnt, daß auf die erfindungsgemäße Weise auch andere Bauteile und Aggregate, beispielsweise lediglich ein Steckersockel befestigbar ist, daß für bestimmte Anwendungen es nicht zwingend erforderlich ist, daß die Klemmhülse geschlitzt ist, sondern lediglich eine stoffelastische Eigenschaft für die Befestigung genutzt wird oder daß das Gehäuse ganz oder teilweise geschlitzt ausgeführt ist und sozusagen als Spannzange für die Aufnahme und das Befestigen von Bauteilen oder handelsüblichen Gebern dient.

## Patentansprüche

1. Anordnung zum Befestigen eines Gehäuses in einer in einer Wand befindlichen Öffnung,
dadurch gekennzeichnet,
daß die Mantelfläche des Gehäuses (3) einen konischen Abschnitt (8) aufweist,
daß dem Gehäuse (3) eine Klemmhülse (5) zugeordnet ist, an welcher ein Innenkonus (9) mit einer der Steigung des konischen Abschnitts (8) der Mantelfläche des Gehäuses (3) entsprechenden Steigung sowie ein Anschlagbund (4) ausgebildet sind und deren Außendurchmesser dem Durchmesser einer zylindrischen Bohrung (2) in der Wand (1) entspricht,
und
daß an dem Gehäuse (3) Mittel angeformt sind, derart daß ein mit dem Gehäuse (3) verbindbares Spannelement, indem es sich an der Klemmhülse (5) stirnseitig abstützt, einen Axialschub auf das Gehäuse (3) ausübt, so daß sich die Klemmhülse (5) infolge der Keilwirkung zwischen dem Konus (8) und dem Innenkonus (9) aufweitet.

2. Anordnung nach Anspruch 1,
dadurch gekennzeichnet,
daß die Klemmhülse (5) geschlitzt ist.

3. Anordnung nach Anspruch 1,
dadurch gekennzeichnet,
daß als Spannelement eine Mutter (6) dient und an dem Gehäuse (3) ein der Mutter (86) zugeordneter Gewindeansatz (7) ausgebildet ist.

4. Anordnung nach Anspruch 1,
dadurch gekennzeichnet,
daß als Spannelement ein radialelastischer Ring (17) dient und an dem Gehäuse (3) eine umlaufende, dem Ring (17) zugeordnete Gleitfläche (18) ausgebildet ist.

5. Anordnung nach Anspruch 1,
dadurch gekennzeichnet,
daß als Spannelement eine einem Kabel (19) bzw. einem Kabelkanal zugeordnete Überwurfmutter (21) dient.

6. Anordnung nach Anspruch 1,
dadurch gekennzeichnet,
daß zwischen der Klemmhülse (5) und dem Gehäuse (3) eine Verdrehsicherung vorgesehen ist.

7. Anordnung nach Anspruch 1,
dadurch gekennzeichnet,
daß an dem Gehäuse (3) Mittel (10, 11) zum Arretieren in Drehrichtung ausgebildet sind.

8. Anordnung nach Anspruch 1,
dadurch gekennzeichnet,
daß das Gehäuse (3) für die Aufnahme eines zug-/drucksensiblen Wandlers (13, 14) ausgebildet ist.

9. Anordnung nach Anspruch 1,
dadurch gekennzeichnet,
daß das Gehäuse (3) als Steckersockel ausgebildet ist.

10. Anordnung nach Anspruch 1,
dadurch gekennzeichnet,
daß das Gehäuse (3) in radialer Richtung elastisch verformbar ist und ein lose im Gehäuse (3) angeordnetes Wandlerelement bzw. dessen Aufnahme während der Axialbewegung des Gehäuses (3) im Gehäuse (3) festgehalten wird.

## Claims

1. Arrangement for securing a housing in an opening located in a wall, characterized in that the outer surface of the housing (3) has a conical section (8), in that there is associated with the housing (3) a clamping socket (5) on which there are constructed an internal cone (9), having a gradient corresponding to the gradient of the conical section (8) of the outer surface of the housing (3), and a stop collar (4) and whereof the external diameter corresponds to the diameter of a cylindrical bore (2) in the wall (1), and in that means are integrally formed on the housing (3) such that a tensioning element which can be connected to the housing (3) exerts an axial thrust on the housing (3) by being supported on the clamping socket (5) on the end side, so that the clamping socket (5) widens as a result of the wedge effect between the cone (8) and the internal cone (9).

2. Arrangement according to Claim 1, characterized in that the clamping socket (5) is slotted.

3. Arrangement according to Claim 1, characterized in that a nut (6) serves as a tensioning element and a threaded attachment (7) associated with the nut (6) is constructed on the housing (3).

4. Arrangement according to Claim 1, characterized in that a radially resilient ring (17) serves as a tensioning element and a peripheral sliding surface (18) associated with the ring (17) is constructed on the housing (3).

5. Arrangement according to Claim 1, characterized in that a union nut (21) associated with a cable (19) or a cable channel serves as a tensioning element.

6. Arrangement according to Claim 1, characterized in that a rotation prevention means is provided between the clamping socket (5) and the housing (3).

7. Arrangement according to Claim 1, characterized in that means (10, 11) for locking in the direction of rotation are constructed on the housing (3).

8. Arrangement according to Claim 1, characterized in that the housing (3) is constructed for receiving a transformer (13, 14) which is sensitive to tension/pressure.

9. Arrangement according to Claim 1, characterized in that the housing (3) is constructed as a plug base.

10. Arrangement according to Claim 1, characterized in that the housing (3) is resiliently deformable in the radial direction and a transformer element, arranged loosely in the housing (3), or the receiver thereof, is held securely in the housing (3) during the axial movement of the housing (3).

## Revendications

1. Dispositif pour la fixation d'un boîtier dans une ouverture pratiquée dans une paroi,
caractérisé par le fait
que la surface latérale du boîtier (3) présente une section conique (8),
qu'au boîtier (3) est associée une douille de serrage (5), sur laquelle sont formés un cône intérieur (9) avec une conicité correspondant à la conicité de la section conique (8) de la surface latérale du boîtier (3) ainsi qu'une collerette de butée (4), et dont le diamètre extérieur correspond au diamètre d'un alésage cylindrique (2) dans la paroi (1),
et
que sur le boîtier (3) sont moulés des moyens, de telle sorte qu'un élément de serrage pouvant être assemblé avec ledit boîtier (3) exerce, en s'appuyant du côté frontal sur la douille de serrage (5), une poussée axiale sur ledit boîtier (3) si bien que ladite douille de serrage (5) s'évase à la suite de l'effet de coin se produisant entre le cône (8) et le cône intérieur (9).

2. Dispositif selon la revendication 1,
caractérisé par le fait
que la douille de serrage (5) est fendue.

3. Dispositif selon la revendication 1,
caractérisé par le fait
que, comme élément de serrage, on utilise un écrou (6) et que sur le boîtier (3) est formée une embase filetée (7) associée audit écrou (6).

4. Dispositif selon la revendication 1,
caractérisé par le fait
que, comme élément de serrage, on utilise un anneau (17) élastique dans le sens radial et que sur le boîtier (3) est formée une surface de glissement (18) circonférentielle associée audit anneau (17).

5. Dispositif selon la revendication 1,
caractérisé par le fait
que, comme élément de serrage, on utilise un écrou à chapeau (21) associé à un câble (19) ou à un passe-câble.

6. Dispositif selon la revendication 1,
caractérisé par le fait
qu'entre la douille de serrage (5) et le boîtier (3) est prévu un dispositif d'immobilisation radiale.

7. Dispositif selon la revendication 1,
caractérisé par le fait
que sur le boîtier (3) sont prévus des moyens (10, 11) pour le blocage dans le sens de la rotation.

8. Dispositif selon la revendication 1,
caractérisé par le fait
que le boîtier (3) est conçu pour servir de logement à un capteur (13, 14) sensible à la traction/pression.

9. Dispositif selon la revendication 1,
caractérisé par le fait
que le boîtier (3) est conçu comme socle de connecteur.

10. Dispositif selon la revendication 1,
caractérisé par le fait
que le boîtier (3) est élastiquement déformable dans le sens radial et qu'un élément transducteur ou le logement de ce dernier, lâchement disposé dans ledit boîtier (3), est retenu pendant le mouvement axial dudit boîtier (3) dans ledit boîtier (3).
